# EUROPÄISCHE PATENTSCHRIFT

(11) **EP 0 567 838 B1**
(45) Veröffentlichungstag und Bekanntmachung des Hinweises auf die Patenterteilung: **24.06.1998**
(21) Anmeldenummer: 93105984.4
(22) Anmeldetag: 13.04.1993
(51) Int. Cl.: C02F 1/66, F04D 3/02

(54) **Neutralisationsanlage**
Neutralisation apparatus
Dispositif de neutralisation

(30) Priorität: 30.04.1992 DE 4214169; 09.09.1992 DE 4230094
(43) Veröffentlichungstag der Anmeldung: 03.11.1993
(73) Patentinhaber: Friatec Aktiengesellschaft, 68229 Mannheim (DE)
(72) Erfinder: Weckbach, Willi, W-6803 Edingen-Neckarhausen (DE); Heidenreich, Hubert, W-6800 Mannheim 61 (DE); Schmitz, Wilhelm, W-6802 Ladenburg (DE)
(74) Vertreter: Klose, Hans, Dipl.-Phys.

(56) Entgegenhaltungen:
- EP-A- 0 331 136
- EP-A- 0 351 148
- DE-A- 2 401 714
- DE-U- 1 860 591
- GB-A- 716 377

## Beschreibung

Die Erfindung bezieht sich auf eine Neutralisiationsanlage gemäß den im Oberbegriff des Patentanspruchs 1 angegebenen Merkmalen.

Aus der EP-A-331 136 ist eine derartige Neutralisationsanlage mit mehreren, zu einer Einheit verbundenen Kammern bekannt, welche als separate und über Rohre oder Leitungen verbundene Behälter ausgebildet sind. Mittels einer Förderpumpe kann aus einer Folienwanne das bei einer Reinigung einer Fassade anfallende Schmutzwasser in den ersten Behälter gepumpt werden. Dieser erste Behälter enthält Schwebestoff-Fänger und das vorgereinigte Wasser fließt durch ein Überlaufrohr in den zweiten Behälter, in welchen von oben ein Rührwerk hineinragt. Ferner kann in den zweiten Behälter aus Tanks Säure oder Lauge mittels Dosierpumpen gepumpt werden, deren Antriebsmotoren mittels Meßfühlern und Reglern ansteuerbar sind. Der zweite Behälter ist über ein Überlaufrohr mit dem dritten Behälter verbunden, in welchen somit das neutralisierte Wasser gelangen kann. Schließlich enthält der dritte Behälter einen Wasserauslauf und mittels Ventilen können bei Bedarf manuell die genannten Rohre abgesperrt oder freigegeben werden. Die Dosierpumpen, die Förderpumpe und das genannte Rührwerk erfordern einen nicht unerheblichen Fertigungsaufwand. Die Tanks für die Lauge bzw. Säure sind neben den Kammern für das zu reinigende Schmutzwasser angeordnet und auf die genannten Dosierpumpen kann nicht ohne weiteres verzichtet werden. Die bekannte Neutralisationsanlage erfordert eine relativ große Stellfläche und der Montage- und Installationsaufwand ist nicht unerheblich.

Ferner ist aus der DE-U-18 60 591 eine Neutralisationsanlage bekannt, welche als Mehrkammersystem ausgebildet ist, wobei eine Anzahl von Kammern zu einer Einheit zusammengefaßt sind und eine transportierbare Baugruppe bilden. Sämtliche Kammern dienen als Reaktionskammern, in welchen in verschiedenen Reinigungsstufen nacheinander die Neutralisation und Entgiftung von Abwässern durchführbar ist. Die Kammern sind in der Nähe des Bodens mit Lochplatten oder Sieben ausgerüstet, unterhalb welchen eine Füllung mit einer Neutralisationsmasse angeordnet sein kann. Die genannten Reaktionskammern können nebeneinander oder übereinander angeordnet sein und mittels Überlaufleitungen ist die Verbindung zwischen den Reaktionskammern hergestellt. Es ist eine separat aufgestellte Pumpe vorgesehen, mittels welcher die zu reinigenden Abwässer in die erste Reaktionskammer förderbar sind. Tanks für Lauge oder Säure sind nicht vorhanden. Es ist ferner eine Stützkonstruktion in Form einer Haube vorgesehen, welche als Lagerung für ein Rührwerk ausgebildet ist und Anschlußflansche für einen Tauchgeber sowie eine Pumpenleitung aufweist.

Schließlich ist aus der EP-A-351 148 eine Vorrichtung zur Wasserbehandlung bekannt, welche wenigstens ein transportables Gehäuse und verschiedene Module aufweist. Die Module stehen über Leitungen miteinander in Verbindung. Den einzelnen Modulen sind unterschiedliche Funktionen zugeordnet, wobei ein Modul zur Behandlung des Abwassers dient, ein anderer Modul als Regelmodul ausgebildet ist und ein weiterer Modul als Systemmodul ausgebildet ist und Motoren, Pumpen und dergleichen enthält. Diese Vorrichtung soll durch geeingete Anordnung des Gehäuses und Zuordnung der Module aus vorgefertigten Komponenten den Erfordernissen entsprechend zusammengestellt werden können.

Hiervon ausgehend liegt der Erfindung die Aufgabe zugrunde, die Neutralisationsanlage der genannten Art mit geringem konstruktiven Aufwand dahingehend weiterzubilden, daß bei kompaktem Aufbau eine hohe Betriebs- und Funktionssicherheit gewährleistet wird. Die Neutralisationsanlage soll ein geringes Bauvolumen aufweisen und eine einfache Handhabung soll erreicht werden.

Die Lösung dieser Aufgabe erfolgt gemäß den in Patentanspruch 1 angegebenen Merkmalen.

Die vorgeschlagene Neutralisationsanlage weist einen betriebssicheren Aufbau auf und durch die Integration des Säuretanks und des Laugentanks auf dem die Reaktionskammer oben abschließenden Deckel wird der Installations- und Montageaufwand reduziert, wobei die Gefährdung der Umwelt durch austretende Lauge oder Säure aus Verbindungsleitungen auf ein Minimum reduziert wird. Die Pumpe kann in Abhängigkeit der Drehrichtung der Antriebswelle bzw. des Antriebsmotors einerseits zum Umwälzen der Flüssigkeit in der Reaktionskammer und andererseits zum Abpumpen der Flüssigkeit aus der Reaktionskammer genutzt werden. Die Pumpe ist bevorzugt als in die Reaktionskammer hineinragende Tauchpumpe ausgebildet und durch die Ausbildung als Tauchpumpe wird ein Heißlaufen oder Trockenlaufen zuverlässig vermieden, was sich besonders günstig auf die Funktionssicherheit der Neutralisationsanlage in der Praxis auswirkt. Durch eine zusätzliche, gleichfalls in die Anlage integrierte Rückhaltekammer wird ein quasi kontinuierlicher Betrieb in zweckmäßiger Weise ermöglicht. Die einzelnen Komponenten der Neutralisationsanlage sind in eine kompakte Baueinheit integriert, wobei diese eine mobile Einheit darstellt. Diese mobile Neutralisationsanlage kann bedarfsweise auch zu einen anderen Einsatzort, ohne besonderen Aufwand, gebracht und dort angeschlossen werden.

Die Lauge bzw. die Säure wird unmittelbar aus dem über der Reaktionskammer angeordneten Laugentank bzw. Säuretank praktisch ohne zusätzliche Leitungen zugeführt. Unterhalb der genannten Tanks ist jeweils ein Elektromagnetventil angeordnet, dessen Eingang jeweils mit einer Öffnung des zugeordneten Tanks verbunden ist und dessen Ausgang direkt in die Reaktionskammer bzw. den die Reaktionskammer oben abschließenden Deckel mündet. Bei geöffnetem Magnetventil kann somit auf kürzestem Wege die Lauge oder Säure in einfacher Weise von oben in die Reaktionskammer hineintropfen oder hineinlaufen, ohne daß hierfür Pumpen oder Leitungen notwendig sind. Durch diese Maßnahmen wird eine nicht unerhebliche Vereinfachung des Fertigungs- und Montageaufwandes erzielt.

Die erfindungsgemäße Fördereinrichtung zeichnet sich durch eine kompakte und funktionssichere Bauweise aus und erfordert einen minimalen Aufwand für die Fertigung und/oder Montage. Die Fördereinrichtung enthält die in die Flüssigkeit tauchende Pumpe, welche derart ausgebildet ist, daß in Abhängigkeit der Drehrichtung der Antriebswelle bzw. eines Antriebsmotors entweder die Durchmischung der insbesondere in der Reaktionskammer befindlichen Flüssigkeit bewirkt wird oder die Flüssigkeit abgepumpt wird. Der Pumpenrotor weist hierfür zwei Fördersysteme auf, welche in Abhängigkeit der Drehrichtung wahlweise wirksam sind. Diese Fördersysteme sind insbesondere mit zwei gegenläufig wirksamen Gewindegängen bzw. Schnecken ausgebildet, welche von der Pumpenwelle in der einen oder anderen Drehrichtung drehbar sind. Des weiteren ist ein in die Flüssigkeit tauchendes Förderrohr vorgesehen, welches einerseits Öffnungen und andererseits einen Anschluß für eine Ablaufleitung enthält. Die vom Fördersystem bei vorgegebener Drehrichtung zu diesen Öffnungen geförderte Flüssigkeit tritt durch diese aus und gelangt wieder in die Kammer, wodurch eine intensive Durchmischung erfolgt, und zwar vor allem mit der zugegebenen Lauge oder Säure. Bei entgegengesetzter Drehrichtung wird hingegen die Flüssigkeit zur Abflußleitung gepumpt. Aufwendige Rohrleitungen, Magnetventile und dergleichen entfallen, zumal durch die Öffnung ein unmittelbarer Austritt der Flüssigkeit in die Kammer erfolgt, ohne daß hierfür besondere Rohrleitungen notwendig sind, wobei gleichwohl eine sehr effektive Durchmischung der Flüssigkeit erreicht wird. Die Fördereinrichtung kann auch für andere Anwendungen zum Einsatz gelangen, wobei hier insbesondere auf Faßpumpen verwiesen sei. Allgemein gesprochen ist die Fördereinrichtung einsetzbar, wenn einerseits Flüssigkeit in einer Kammer durchmischt und andererseits bei Bedarf aus dieser Kammer abgepumpt werden soll.

In einer besonderen Ausgestaltung ist eine Hydraulikeinheit vorgesehen, welche zumindest teilweise die Leitungen für den Flüssigkeitstransport enthält und als vorgefertigte Baugruppe mit Ventilen und Pumpen im Installationsraum angeordnet ist. Diese Hydraulikeinheit enthält eine auf dem Deckel der Reaktionskammer beispielsweise mittels vier Schrauben zu befestigende Installationsplatte, welche insbesondere aus Kunststoff besteht und in welche die Leitungen, zweckmäßig auch die erforderlichen Ventile oder deren Gehäuse, integriert sind. Hierzu weist die Installationsplatte eine vorgegebene Höhe derart auf, daß auch in horizontaler Richtung verlaufende Querbohrungen angeordnet werden können, welche die integrierten Teile des Rohrleitungssystems bilden.

Ferner können die erforderlichen Ventile und Pumpen oder zumindest Teile derselben in die Installationsplatte in Form von Bohrungen, Ausnehmungen oder dergleichen integriert sein. Auch Anschlußelemente, und zwar insbesondere in Form von Gewinden, zum Anschluß von externen Rohrleitungsteilen sind zweckmäßig in die Installationsplatte integriert. Schließlich trägt die Installationsplatte auch den Antriebsmotor mit der Tauchpumpe und insgesamt wird die derart ausgebildete Hydraulikeinheit als komplette Baugruppe vorgefertigt, die problemlos und mit geringem Montageaufwand in den Installationsraum eingesetzt werden kann und bei Bedarf, beispielsweise zu Reparatur- oder Servicemaßnahmen, ausgebaut und überprüft werden kann.

Die Zumischung von Säure oder Lauge erfolgt vorteilhaft über eine Strahlpumpe mit vorgeschalteten Magnetventilen, über welche bedarfsweise Säure oder Lauge dosiert zuführbar ist.

Weiterbildungen und besondere Ausgestaltungen der Erfindung sind in den Unteransprüchen sowie der nachfolgenden Beschreibung angegeben.

Die Erfindung wird nachfolgend anhand der in der Zeichnung dargestellten Ausführungsbeispiele näher erläutert. Es zeigen:
- Fig. 1: schematisch eine perspektivische Darstellung der Neutralisationsanlage,
- Fig. 2: einen Vertikalschnitt der Neutralisationsanlage entlang Schnittlinie II gemäß Fig. 1,
- Fig. 3: einen Schnitt entlang Schnittlinie III gemäß Fig. 2,
- Fig. 4: eine Aufsicht von oben auf die Neutralisationsanlage mit Rohrleitungen,
- Fig. 5 - 7: Vertikalschnitte und Ansichten der Neutralisationsanlage gemäß Fig. 4,
- Fig. 8: eine Aufsicht von oben auf eine weitere Ausführungsform mit einer kompletten Hydraulikeinheit,
- Fig. 9: eine Ansicht der Hydraulikeinheit in Blickrichtung IX gemäß Fig. 8,
- Fig. 10: eine Aufsicht auf eine weitere Ausführungsform der Neutralisationsanlage mit einer besonders ausgestalteten Fördereinrichtung,
- Fig. 11: einen Schnitt entlang Schnittlinie XI, gemäß Fig. 10, wobei die erfindungsgemäße Fördereinrichtung teilweise im Schnitt dargestellt ist,
- Fig. 12: vergrößert den unteren Teil der besonderen Fördereinrichtung,
- Fig. 13, 14: eine Frontalansicht bzw. eine Seitenansicht der Neutralisationsanlage in den Blickrichtungen XIII bzw. XIV gemäß Fig. 10.

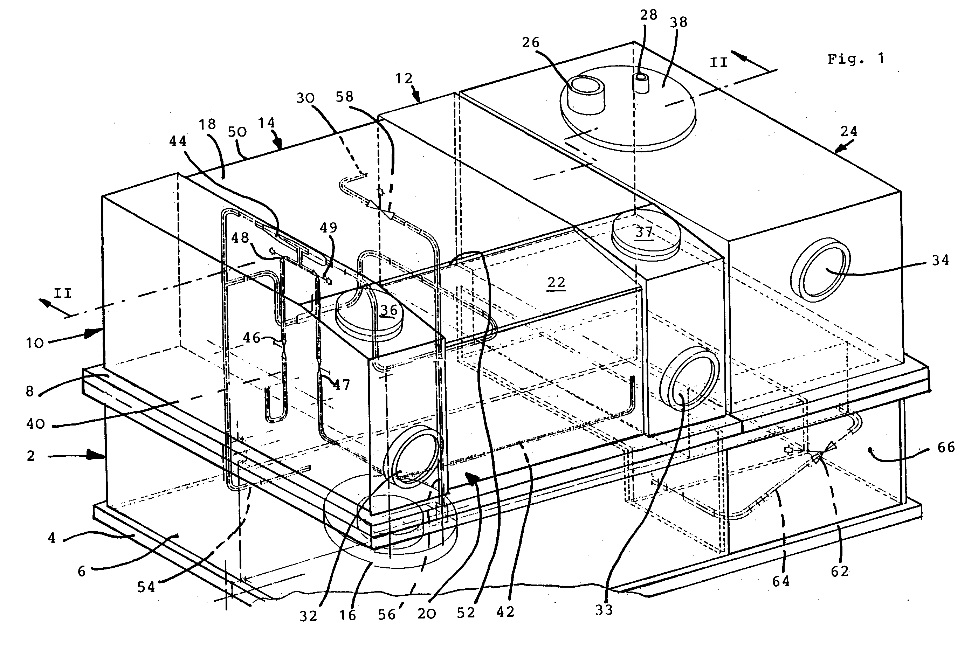

Die in Fig. 1 dargestellte Neutralisationsanlage enthält eine Reaktionskammer 2, welche als ein nach oben geöffneter Behälter mit einem Boden 4 sowie vier rechtwinklig zueinander angeordneten Seitenwänden 6 ausgebildet ist. Die Reaktionskammer 2 ist oben mit einem Deckel 8 abgeschlossen, auf welchem ein Laugentank 10 und ein Säuretank 12 vorgesehen sind. Der Laugentank 10 und der Säuretank 12 sind beabstandet unter Bildung eines Installationsraumes 14 angeordnet, welcher hier schematisch angedeutete Rohrleitungen ebenso aufnimmt wie einen Motor einer Tauchpumpe 16 in der Reaktionskammer 2. Der Installationsraum 14 befindet sich über dem genannten Deckel 8 und ist oben im Bereich der Oberkanten der genannten Tanks 10 und 12 mit einem Verschlußdeckel 18 verschließbar. Im Bereich der Vorderseite der Neutralisationsanlage ist eine Steuereinheit 20 vorgesehen, welche gleichfalls seitlich vom Laugentank 10 und Säuretank 12 eingeschlossen ist. Diese Steuereinheit enthält die elektrische Stromversorgung, Elektronik, Relais und dergleichen, um die nachfolgend noch zu erläuternden Pumpen, Ventile und Überwachungseinrichtungen in der erforderlichen Weise zu steuern. Die Rohrleitungen und ebenso die Steuereinheit mit elektrischen Leitungen sind komplett in die Neutralisationsanlage integriert, und es sind zur Inbetriebnahme keine besonderen Installationsmaßnahmen, wie Verlegen von Verbindungsleitungen oder elektrischen Leitungen zwischen den einzelnen Komponenten, erforderlich. Nach dem Aufstellen der Neutralisationsanlage muß lediglich ein hier nicht weiter dargestelltes elektrisches Anschlußkabel, welches mit der Steuereinheit 20 verbunden ist, an eine übliche Steckdose angeschlossen werden. Die elektrische Steuereinheit 20 ist oben mit einer schwenkbaren Klappe 22 abgedeckt, welche die erforderlichen Bedienelemente, Schalter und Anzeigen zur Funktionsüberwachung enthält.

Über der Reaktionskammer 2 ist ferner seitlich eine Rückhaltekammer 24 mit einem Zulauf 26 angeordnet, über welchen die zu neutralisierende Flüssigkeit eingeleitet wird. Die Rückhaltekammer 24 ist ferner mit einem überlauf 28 versehen, welcher ebenso wie ein mit der Tauchpumpe 16 verbundener Auslauf 30 an die Kanalisation in bekannter Weise anzuschließen ist. Über den Zulauf kann in einfacher Weise der Anschluß an den Ablauf eines Laborbeckens eines Abluftwäschers oder dergleichen erfolgen. Der Zulauf 26, der überlauf 28 und/oder der Auslauf 30 sind als Stutzen ausgebildet, um in einfacher Weise die Installation und Montage durchführen zu können. Nach der Verbindung des elektrischen Anschlußkabels der Steuereinheit 20 mit dem Stromnetz ist die Neutralisationsanlage betriebsbereit.

Der Laugentank 10, der Säuretank 12 sowie die Rückhaltekammer 24 enthalten in ihren Seitenwänden jeweils Schaugläser 32, 33, 34, so daß der jeweilige Füllstand leicht überprüft werden kann. Oben sind der Laugentank 10 und der Säuretank 12 mit Einfüllstutzen 36, 37 versehen, die mit zugeordneten Deckeln, insbesondere über ein Schraubgewinde, verschließbar sind und durch welche ggfs. auch eine Reinigung der Tanks möglich ist. Auch die Rückhaltekammer 24 ist oben mit einem Deckel 38 abgeschlossen, welcher in zweckmäßiger Weise den Zulauf 26 und den Überlauf 28 enthält. Auch dieser Deckel 38 kann bedarfsweise entfernt werden.

Die Verbindungsleitungen zwischen Reaktionskammer 2, Laugentank 10, Säuretank 12, Rückhaltekammer 24 sowie der Tauchpumpe 16 liegen sämtlich innerhalb der Außenkonturen der erfindungsgemäßen Anlage und sind somit in optimaler Weise vor äußeren Einwirkungen geschützt, wobei auf kürzestem Wege die Verbindung der verschiedenen Komponenten gewährleistet ist. Vom Laugentank 10 führt eine Leitung 40 und vom Säuretank 12 eine Leitung 42 zu einer Pumpe 44, welche bevorzugt als eine Strahlpumpe ausgebildet ist. Die Leitungen 40, 42 und ferner die übrigen noch zu erläuternden Leitungen sind bevorzugt als Rohrleitungen ausgebildet, welche mittels geeigneten und insbesondere lösbaren Verbindungselementen wie Schraubverbindungen miteinander bzw. den zugehörenden Ventilen, Anschlüssen und dergleichen verbunden sind. In den Leitungen 40, 42 sind zum einen manuell betätigbare Absperrventile 46, 47 sowie elektrisch betätigbare Magnetventile 48, 49 angeordnet. Die Magnetventile 48, 49 sind mit der Elektronik der Steuereinheit 20 über hier nicht weiter dargestellte elektrische Kabel verbunden. Die Absperrventile 46, 47 sowie die Magnetventile 48, 49 sind in dem Installationsraum 14 angeordnet und somit bei leichter Zugänglichkeit gleichwohl vor äußeren Einwirkungen geschützt.

Der Installationsraum 14 ist hinten mit einer nach oben durchgehenden Rückwand 50 und vorn zur Steuereinheit 20 hin mit einer Zwischenwand 52 abgeschlossen, wobei die seitliche Begrenzung mit dem Laugentank 10 und dem Säuretank 12 hergestellt ist. Der Installationsraum 14 ist somit, abgesehen von seinem oberen Verschlußdeckel 18 allseits dicht abgeschlossen, so daß eventuelle Störungen oder Leckagen der Leitungen nicht zu einem unzulässigen Austritt von Säure, Lauge oder der zu reinigenden Flüssigkeit führen kann. Die Verbindungsleitung 42 vom Säuretank 12 zur Strahlpumpe 44 verläuft in zweckmäßiger Weise zum Teil unterhalb des Deckels 8, also im oberen Bereich der Reaktionskammer 2. Die Leitung 40 ist ebenso wie die Leitung 42 durch den Deckel 8 nach unten geführt, so daß eine vollständige Entleerung der Tanks 10, 12 bei einfacher Leitungsführung gewährleistet ist. Es sei festgehalten, daß der Deckel 8 den Boden der beiden Tanks 10, 12 ebenso bildet wie des Installationsraums 14. Von der Pumpe 44 führt im Installationsraum 14 eine Einspritzleitung 54 nach unten in die Reaktionskammer 2. Entsprechend dem mit einer geeigneten Sonde erfaßten pH-Wert der in der Reaktionskammer 2 befindlichen Flüssigkeit werden über die Steuereinheit 20 die Magnetventile 48, 49 betätigt, um durch Zugabe von Lauge bzw. Säure die Neutralisation zu bewirken.

Von der am Boden 4 der Reaktionskammer 2 angeordneten Tauchpumpe 16 führt eine Leitung 56 nach oben, welche einerseits mit der Strahlpumpe 44 und andererseits über ein Magnetventil 58 mit einem Auslauf 60 verbunden ist. Während der Neutralisation ist das Magnetventil 58 geschlossen und mittels der Tauchpumpe 16 erfolgt über die Leitungen 56 und 54 die Umwälzung und Mischung der zu neutralisierenden Flüssigkeit. Es ist ersichtlich, daß die Strahlpumpe 44 von der aus der Reaktionskammer 2 durch die Leitungen geförderten Flüssigkeit durchströmt wird, wobei bedarfsweise beim Öffnen der Magnetventile 48, 49 Lauge bzw. Säure zuführbar ist. Ist der gewünschte und vorgebbare pH-Wert erreicht, so wird das Magnetventil 58 geöffnet, so daß die neutralisierte Flüssigkeit über den Auslauf 30 zur Kanalisation abgepumpt wird. Die Strahlpumpe 44 weist einen hinreichend großen Strömungswiderstand auf, so daß die Flüssigkeit tatsächlich zum Auslauf 60 gefördert wird. Für die Tauchpumpe 16 ist keine Gefahr für ein Heißlaufen oder Trockenlaufen gegeben, wodurch den Anforderungen an eine lange Lebensdauer und hohe Funktionssicherheit entsprochen wird. Des weiteren wird durch die erfindungsgemäß vorgesehene Anordnung der Tauchpumpe und deren Integration in die Neutralisationsanlage ein Entlüften der Leitungen entbehrlich.

Aufgrund der Rückhaltekammer 24 wird ein kontinuierlicher Betrieb der Neutralisationsanlage erreicht. Während in der erläuterten Weise in der Reaktionskammer 2 die Neutralisation der dort vorhandenen Flüssigkeit durchgeführt wird, kann über den Zulauf 26 kontinuierlich weitere Flüssigkeit zugeführt und in der Rückhaltekammer 24 gesammelt werden. Nach dem Abpumpen der neutralisierten Flüssigkeit aus der Reaktionskammer 2, wobei eine Überwachung zweckmäßig mit einem Niveauregler erfolgt, wird ein Magnetventil 62 geöffnet, um so über eine Leitung 64 die zu neutralisierende Flüssigkeit aus der Rückhaltekammer 24 in die Reaktionskammer 2 fließen zu lassen. Für das Magnetventil 62 und die Leitung 64 ist unterhalb der Rückhaltekammer 24 ein freier Raum 66 vorhanden.

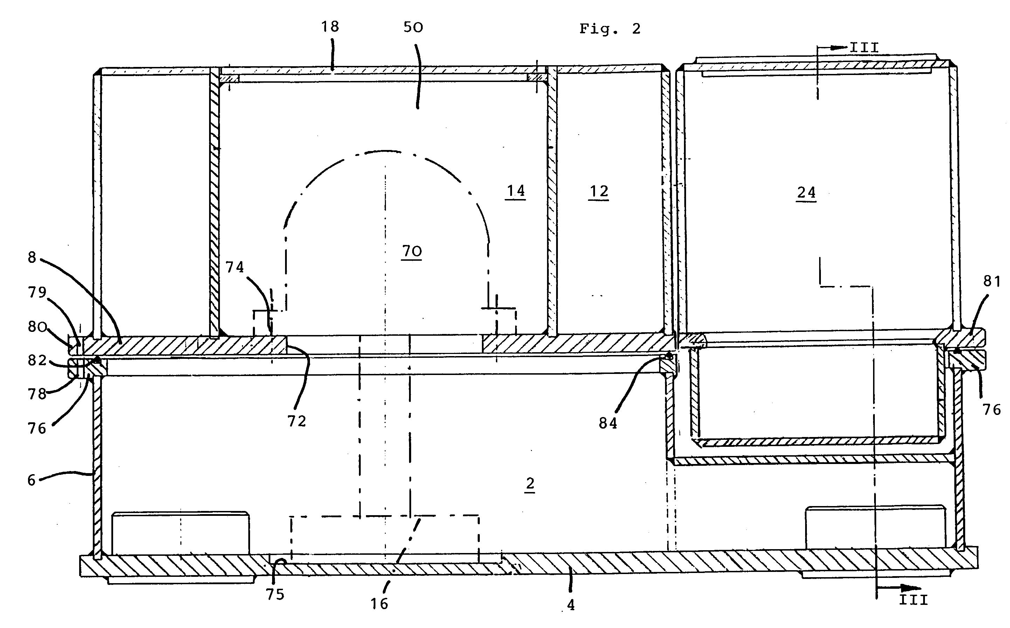

Fig. 2 zeigt einen Schnitt der Neutralisationsanlage in einer vertikalen Schnittebene, wobei hier der zwischen dem Laugentank 10 und dem Säuretank 12 angeordnete Installationsraum 14 gut zu erkennen ist. Mit strichpunktierten Linien ist ein elektrischer Antriebsmotor 70 für die gleichfalls nur strichpunktiert angedeutete Tauchpumpe 16 im Installationsraum 14 angeordnet. Die eingangs erläuterten Rohrleitungen und Ventile, welche erfindungsgemäß gleichfalls im Installationsraum 14 angeordnet sind, sind aus Gründen der Übersicht hier nicht weiter dargestellt. Der Deckel 8 enthält eine Öffnung 72, durch welche die mit dem Antriebsmotor 70 gekoppelte Tauchpumpe 16 in die Reaktionskammer 2 eingesetzt werden kann. Im Bereich der Tauchpumpe 16 weist der Boden 4 eine Vertiefung 75 auf, in welcher die Tauchpumpe 16 hineinragt. Hierdurch wird gewährleistet, daß beim Abpumpen praktisch keine Restmengen in der Reaktionskammer 2 verbleiben. Durch strichpunktierte Linien 74 ist die Verbindung des Antriebsmotors oben auf dem Deckel 8 angedeutet. Am oberen Ende der Seitenwände 6 der Reaktionskammer 2 sind flanschartige Auflageteile 76 um den gesamten oberen Umfang der Reaktionskammer 2 herum angeordnet. Diese Auflageteile 76 stehen nach außen über und enthalten Bohrungen 78, welche mit entsprechenden Bohrungen 79 im äußeren Rand 80 des Deckels 8 fluchten. Zwischen den Auflageteilen 76 und dem Deckel 8 bzw. dessen äußeren Rand 80 ist oben rundherum um die Reaktionskammer 2 ein Dichtelement 82 angeordnet. Dieses Dichtelement 82 ist bevorzugt in einer Nut 84 in der horizontalen oberen Endfläche der Auflageteile 76 angeordnet. Mit den Verbindungselementen, welche durch die Bohrungen 78, 79 hindurchgreifen, und bevorzugt als Schrauben ausgebildet sind, wird eine dichte, funktionssichere und gleichwohl bei Bedarf wieder lösbare Verbindung zwischen der Reaktionskammer und dem Deckel mitsamt den darauf angeordneten Komponenten erreicht. Durch diese im Prinzip zweiteilige Konstruktion der Neutralisationsanlage wird eine einfache Fertigung und Montage bei gleichzeitig kompakter und integrierter Bauweise der einzelnen Komponenten gewährleistet.

Gemäß Fig. 2 ist die Reaktionskammer mit dem Boden 4, Seitenwänden 6 und den Auflageteilen 76 aus verschiedenen einzelnen Platten zusammengebaut, welche durch Klebung oder Schweißung dicht miteinander verbunden sind. Alternativ kann die Reaktionskammer auch aus einem einzigen Stück gefertigt sein. Das gleiche gilt hinsichtlich des Deckels 8 mit dem Laugentank 10, Säuretank 12 sowie Installationskammer 14. Auch die Rückhaltekammer 24 kann wahlweise aus Platten zusammengesetzt oder in entsprechender Weise wiederum einstückig ausgebildet sein. Schließlich kann die Rückhaltekammer 24 ebenso wie der Laugentank 10 und der Säuretank 12 in den Deckel 8 integriert sein oder aber als separates Bauteil ausgebildet sein, wobei der äußere Rand 81 der Rückhaltekammer in entsprechender Weise mit den zugeordneten Auflageteilen 76 der Rückhaltekammer mittels geeigneten Befestigungselementen verbunden ist.

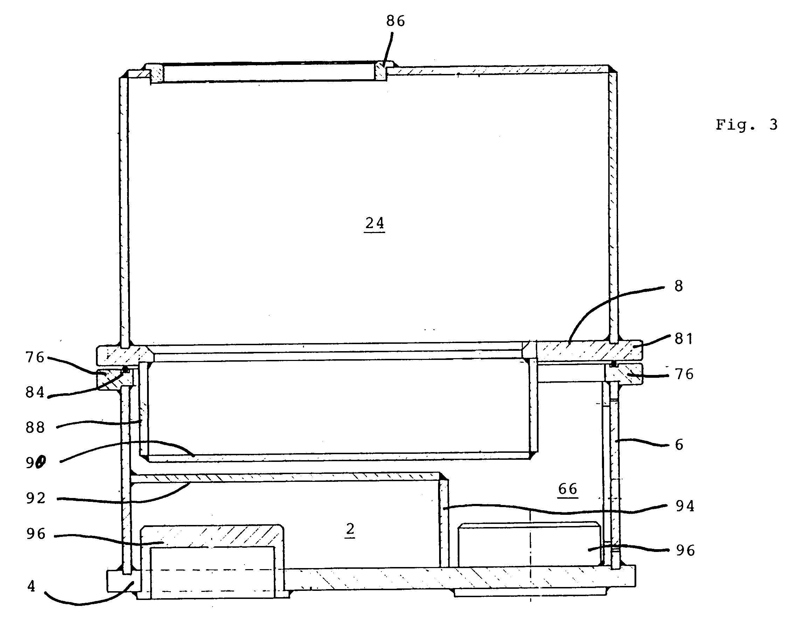

Fig. 3 zeigt einen vertikalen Schnitt durch die Neutralisationsanlage im Bereich der Rückhaltekammer 24. In der oberen Decke der Rückhaltekammer 24 ist hier gut ein Flansch 86 für den eingangs erwähnten Deckel mit Zulauf und Überlauf zu erkennen. Des weiteren ist der freie Raum 66 unterhalb der Rückhaltekammer 24 zu erkennen. Zur Vergrößerung des Volumens der Rückhaltekammer 24 ist diese nach unten mittels Wandteilen 88 und einem Boden 90 verlängert. Im Bereich der Rückhaltekammer 24 und unterhalb derselben ist die Reaktionskammer 2 dementsprechend verkleinert und mit einer zusätzlichen Decke 92 sowie Seitenwand 94 abgeschlossen. In dem unteren Boden 4 befinden sich jeweils in den Ecken topfartige Einsätze 96, welche nach unten hin offen sind und insbesondere zur Aufnahme von hier nicht weiter dargestellten Rollen, Rädern oder ähnlichem vorgesehen sind. Derartige Rollkörper ermöglichen einen einfachen Transport der Neutralisationsanlage, und aufgrund der erfindungsgemäß vorgesehenen Einsätze 96 wird insoweit die Gesamthöhe der Neutralisationsanlage praktisch nicht verändert.

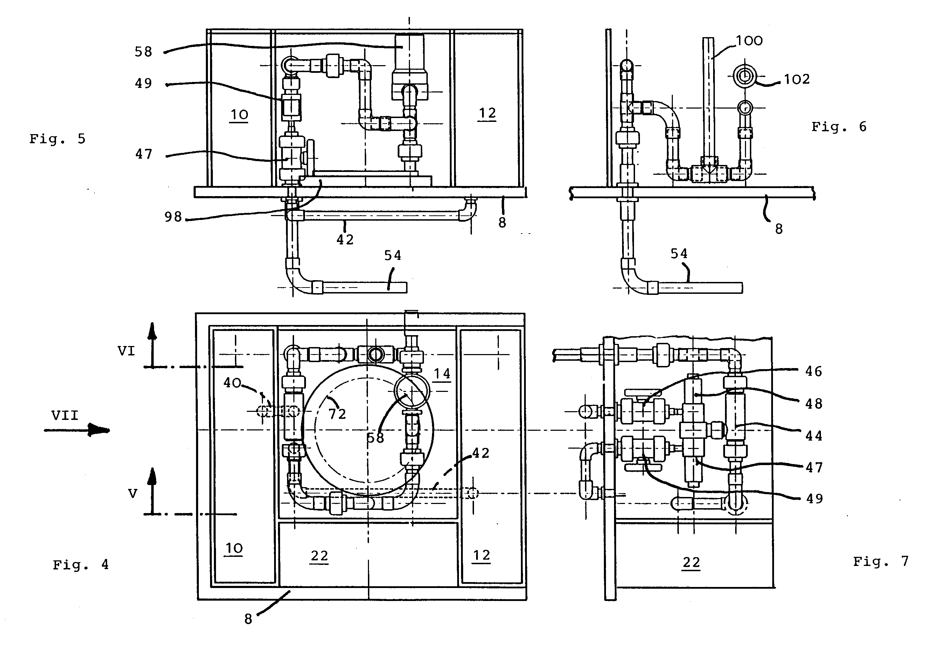

Fig. 4 zeigt in einer Aufsicht den Deckel 8 der Neutralisationsanlage mit dem Laugentank 10 sowie dem Säuretank 12. Die separat vom Deckel 8 angeordnete Rückhaltekammer ist hier nicht dargestellt. Zwischen dem Laugentank 10 und dem Säuretank 12 ist der Installationsraum 14 zu erkennen, in dessen Bereich der Deckel 8 die Öffnung 72 für die Tauchpumpe aufweist. Die erfindungsgemäß in dem Installationsraum 14 angeordneten Rohrleitungen mit der Strahlpumpe 44 und dem Magnetventil 58 sind hier klar zu erkennen. Der Verschlußdeckel, welcher während des Betriebs oben den Installationsraum abschließt, ist hier nicht dargestellt, während die schwenkbare Klappe 22 über der im vorderen Bereich der Neutralisationsanlage angeordneten Steuereinheit vorhanden ist. Die Leitungen 40, 42, welche im Deckel 8 im Bereich der Bodenflächen des Laugentanks 10 und des Säuretanks 12 beginnen, sind hier gestrichelt angedeutet.

Fig. 5 zeigt einen vertikalen Schnitt entlang Schnittlinie IV gemäß Fig. 4 und die unterhalb des Deckels 8 verlaufende Leitung 42 vom Säuretank 12 zum Ventil 47 und Magnetventil 49 sind hier gut zu erkennen. Aus Gründen der Übersicht ist von dem elektrischen Antriebsmotor der Tauchpumpe nur ein Flansch 98 angedeutet, welcher mit dem Deckel 8 dicht und fest verschraubt ist. Des weiteren ist das innerhalb des Installationsraums 14 angeordnete Magnetventil 58 des Auslaufs zu erkennen.

Fig. 6 zeigt teilweise einen Schnitt entlang Schnittlinie VI gemäß Fig. 4, wobei die nach unten durch den Deckel 8 geführte Einspritzleitung 54 dargestellt ist. Ferner ist die vertikal nach oben gerichtete, im Nebenstrom angeordnete pH-Meßsonde 100 dargestellt. Die zum Auslauf führende Leitung 102 ist hier im Schnitt zu erkennen.

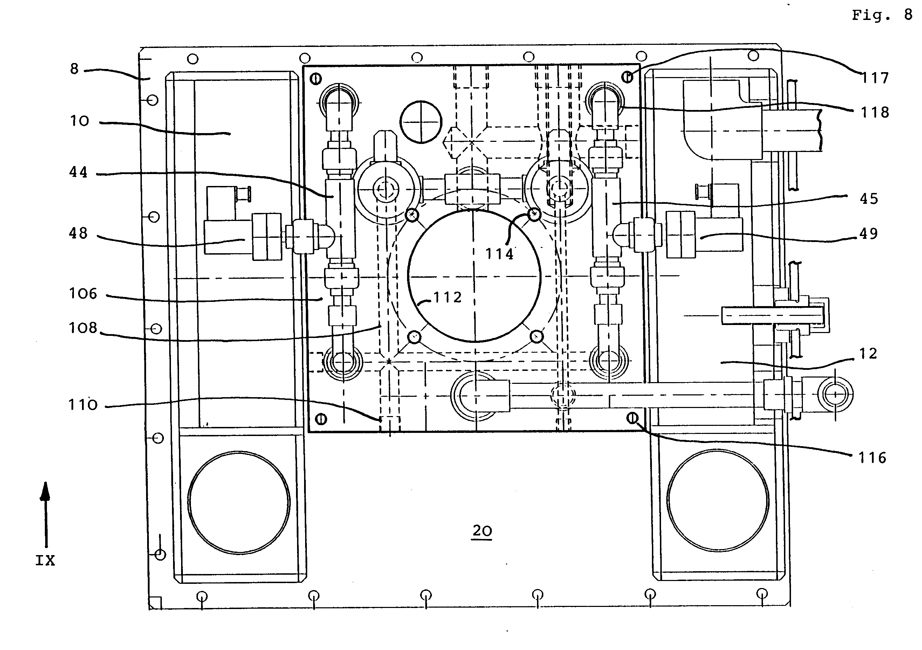

Fig. 7 zeigt eine Ansicht in Blickrichtung VII von der Seite auf die Installationskammer 14 mit der Strahlpumpe 44, den Ventilen 46, 47 sowie den beiden Magnetventilen 48, 49. Auch die zur Verbindung der einzelnen Teile der Rohrleitungen mit den genannten Ventilen vorhandenen Verbindungselemente, welche insbesondere als Schraubverbindungen mit Überwurfmuttern und dergleichen ausgebildet sind, sind dargestellt.

Fig. 8 zeigt eine Aufsicht auf eine weitere Ausführungsform mit einer in der Installationskammer angeordneten Hydraulikeinheit 104, welche zwischen dem Laugentank 10 und dem Säuretank 12 auf dem Deckel 8 angeordnet ist. Die Hydraulikeinheit 104 enthält eine Installationsplatte 106, welche aus Kunststoff besteht und Querbohrungen 108 enthält. An den Rändern 110 sind die Querbohrungen 108 mit Gewinden 110 für Verschlußstopfen versehen. Die Installationsplatte enthält im Zentrum eine Öffnung 112, durch welche die mit dem hier nicht dargestellten Antriebsmotor verbundene Tauchpumpe nach unten in die Reaktionskammer durchführbar ist. Am Rand der Öffnung 112 sind Bohrungen 114, die zweckmäßig als Gewindebohrungen ausgebildet sind, für die Verbindung des Antriebsmotors vorgesehen. Ferner enthält die Installationsplatte 106 in ihren vier Ecken jeweils eine Bohrung 116 zur Befestigung auf dem Deckel 8 mittels Schrauben 117. Die zur Abschottung des Installtionsraum vorgesehene Rückwand und ebenso die Zwischenwand zur Steuereinheit 20 wird hier aus Gründen der Übersicht nicht weiter dargestellt.

Die Installationsplatte trägt oben ferner verschiedene Rohrleitungen, die Pumpen 44, 45 sowie Ventile 46, 47, deren Funktionsweisen oben bereits erläutert wurden. Die Anschlüsse und Verbindungen der verschiedenen Bauteile und Komponenten erfolgt vor dem Einbau in die Neutralisationsanlage, wobei aufgrund der vereinfachten Zugänglichkeit der Montageaufwand erheblich reduziert ist. Die Installationsplatte 106 enthält auch Gewinde für Verschraubungen 118, über welche problemlos der Anschluß der externen Leitungsteile, Ventile und/oder Pumpen durchgeführt werden kann.

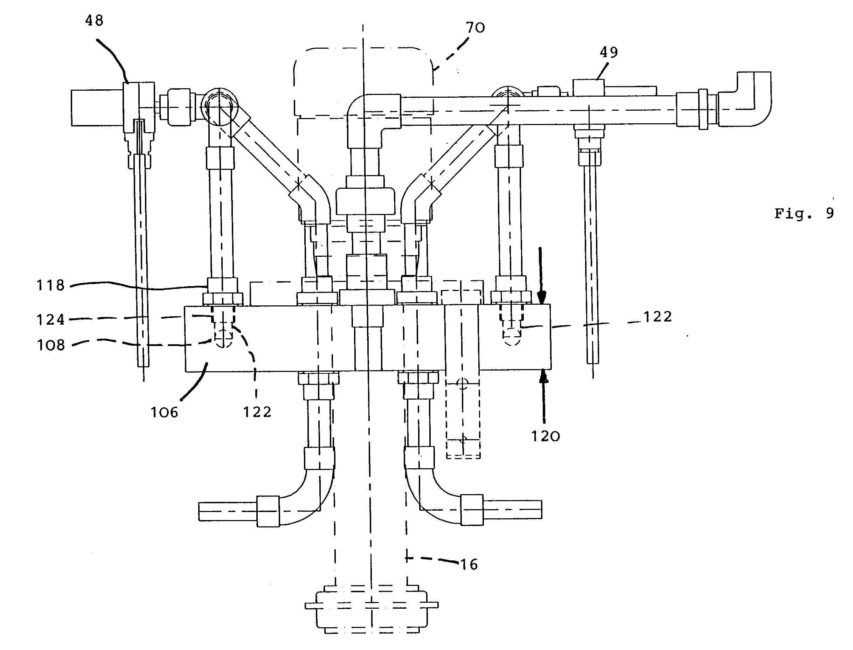

Fig. 9 zeigt eine frontale Ansicht der Hydraulikeinheit, deren wesentlicher Bestandteil die Installationsplatte 106 bildet. Die Installationsplatte 106 ist Montageplatte für den Antriebsmotor 70 mit der Tauchpumpe 16 und ferner verschiedener externer Rohrteile mit den bereits erläuterten Ventilen 48, 49 sowie Pumpen. Die Montageplatte bzw. Installationsplatte 106 besteht in zweckmäßiger Weise aus Kunststoff und weist eine vorgegebene Höhe 120 derart auf, daß sowohl die Querbohrungen 108 als auch vertikale Bohrungen 122 mit den bereits erwähnten Gewinden 124 für Anschlußelemente bzw. Verschraubungen 118 funktionssicher vorgesehen sind.

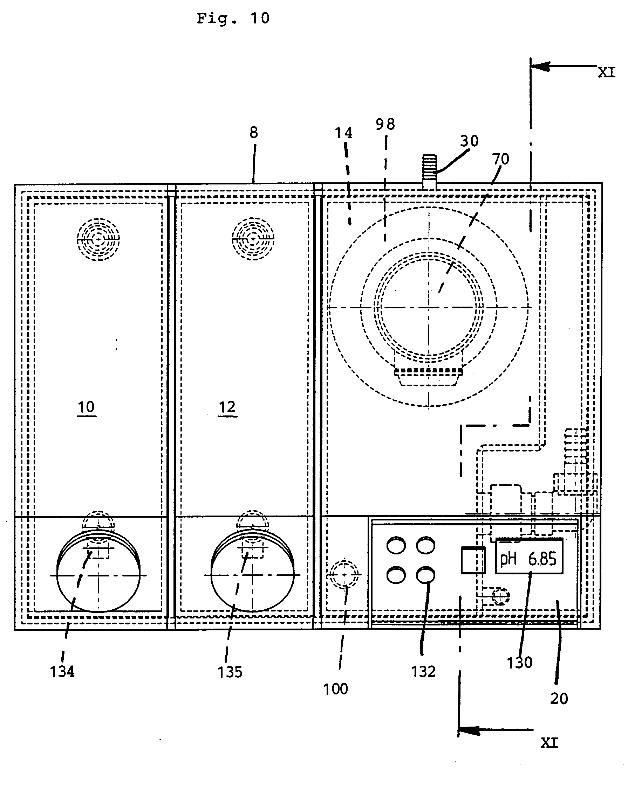

Fig. 10 zeigt eine besondere Ausgestaltung der Fördereinrichtung der Neutralisationsanlage. Der Laugentank 10 und der Säuretank 12 sind nebeneinander angeordnet und daneben befindet sich der Antriebsmotor 70 im Installationsraum 14. Bei dieser besonderen Ausgestaltung entfallen im Installationsraum die oben erläuterten Rohrleitungen, Ventile und dergleichen, wobei lediglich die Abflußleitung mit dem nach außen geführten Auslauf 30 vorhanden ist. Der Antriebsmotor 70 ist hier mittels des ringförmig ausgebildeten Flansches 98 auf dem Deckel 8 der Reaktionskammer befestigt, wobei der Deckel wiederum eine Öffnung für die nach unten in die Flüssigkeit der Reaktionskammer tauchende Pumpe oder Fördereinrichtung aufweist. Entscheidend für diese besondere Ausgestaltung ist die Ausbildung des Antriebsmotors 70 derart, daß die Drehrichtung wahlweise vorgebbar ist. Der Antriebsmotor 70 ist zweckmäßig als Drehstrommotor ausgebildet, dessen Drehrichtung über die Phasenfolge der Ansteuerung der Wicklungen vorgegeben wird, wobei lediglich mittels einer Relaissteuerung die Anschlüsse von zwei der drei Wicklungsphasen zu vertauschen sind. Dies kann in einfacher Weise durch Betätigen eines Schalters der Steuereinheit und eines daran angeschlossenen Relais erfolgen oder bedarfsweise auch automatisch, insbesondere in Abhängigkeit des vorgebbaren pH-Wertes der Flüssigkeit in der Reaktionskammer. Die separat vom Installationsraum 14 angeordnete Steuereinheit 20 enthält eine Anzeige 130 für den pH-Wert, so daß vom Bedienungspersonal nach Abschluß des Neutralisationsvorganges beim Erreichen des gewünschten pH-Wertes durch Betätigen eines Schalters 132 die Drehrichtung des Antriebsmotors derart vorgegeben wird, daß die neutralisierte Flüssigkeit abgepumpt und über den Auslauf 30 und einen daran angeschlossenen Schlauch in die Kanalisation abgeleitet werden kann. Die Verbindung der beiden Tanks 10 und 11 zu der darunter befindlichen Reaktionskammer kann durch je ein Elektromagnetventil 134, 135 erfolgen, welche erfindungsgemäß zwischen dem Boden des jeweiligen Tankes und dem Deckel der Reaktionskammer angeordnet sind, wobei dort die Eingänge bzw. Ausgänge entsprechend vorgesehen sind.

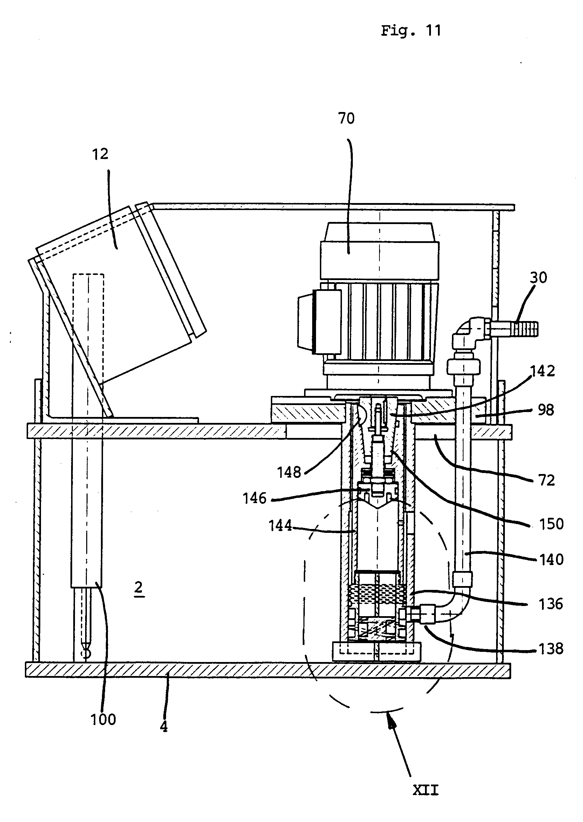

Fig. 11 zeigt einen Schnitt entlang Schnittebene XI, gemäß Fig. 10, wobei die erfindungsgemäße Fördereinrichtung mit dem Antriebsmotor 70 teilweise geschnitten dargestellt ist. Die Fördereinrichtung enthält ein zweckmäßig bis zum Boden 4 der Reaktionskammer 2 ragendes Förderrohr 136. Dieses Förderrohr 136 ist mit dem Flansch 98 verbunden und ragt durch die Öffnung 72 des Deckels 8. Das Förderrohr 136 hat an seinem unteren Ende einen Anschluß 138 für eine Abflußleitung 140, über deren Auslauf 30 beispielsweise mittels eines Schlauches die Verbindung mit der Kanalisation hergestellt werden kann. Die Abflußleitung 140 ist ebenso wie das Förderrohr 136 mit dem Flansch 98 verbunden bzw. durch diesen hindurchgeführt. Der Flansch 98 und somit die komplette Fördereinrichtung incl. der Abflußleitung 140 sind auf dem Deckel 8 in geeigneter Weise, insbesondere mittels hier nicht weiter dargestellten Schrauben, befestigt. Es handelt sich insoweit um eine vorgefertigte Baugruppe, welche komplett vormontiert ist und zur Montage lediglich von oben auf den Deckel 8 aufgesetzt wird, wobei das Förderrohr 136 und die Abflußleitung 140 durch die Öffnung 72 des Deckels 8 hindurchgeführt werden. Nachfolgend wird mit dem Flansch 98 die Öffnung 72 verschlossen und die Befestigung auf dem Deckel 8 vorgenommen.

Der Antriebsmotor 70 enthält eine Welle 142, mit welcher ein Drehkörper 144 über eine Kupplung 146 und eine Paßfeder 148 drehfest verbunden ist. Die Welle 142 weist eine konische Außenfläche auf, welche in eine entsprechend konische Ausnehmung 150 des Drehkörpers 144 eingreift, wodurch dessen koaxiale Ausrichtung zur Welle 142 gewährleitstet ist. Auch das Förderrohr 136 ist koaxial zur Welle 142 und/oder zum Drehkörper 144 ausgerichtet, um aufgrund möglichst geringer Spalte eine hohe Förderleistung des Fördersystems zu gewährleisten.

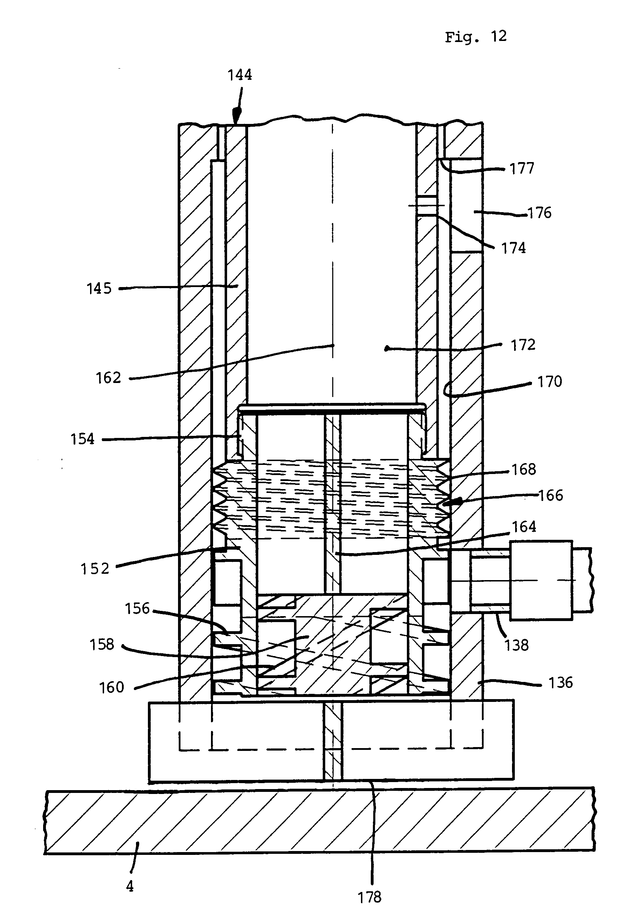

Fig. 12 zeigt vergrößert den unteren Teil der Fördereinrichtung mit dem Förderrohr 136, dem Drehkörper 144 mit einer ringförmigen Wand 145 und einem Förderelement 152, welches zwei drehrichtungsabhängige Fördersysteme enthält und drehfest mit dem Drehkörper 144, insbesondere mittels einer vorgespannten Gewindeverbindung 154, gekoppelt ist. Am unteren Ende enthält das Förderelement 152 außen eine erste Förderspirale 156, welche im Bereich des Anschlusses 138 endet. Das Förderelement 152 ist als ein im Inneren hohler Ringkörper ausgebildet, in dessen Innenraum ein Einsatzelement 158 am unteren Ende eingebaut ist. Das Einsatzelement 158 enthält eine zweite Förderspirale 160, welche bezüglich der ersten äußeren Förderspirale 156 den entgegengesetzten Drehsinn aufweist. Ferner ist im Förderelement 152 oben anschließend an das Einsatzelement 158 eine zur Drehachse 162 parallele Zwischenwand 164 angeordnet. Alternativ könnte die zweite Förderspirale in die Innenwand des Förderelements 152 integriert sein und radial innen von einem zylindrischen Einsatzelement abgeschlossen sein.

Oberhalb des Anschlußstutzens 138 ist an der Außenfläche eine Dichtung 166 vorgesehen. Diese Dichtung 166 zwischen dem Drehkörper 144 bzw. dem Förderelement 152 und der Innenwand des Förderrohres 136 ist zweckmäßig berührungslos ausgebildet, und zwar insbesondere in Form von Gewindegängen, deren Zahnspitzen 168 zur Innenfläche 170 des Förderrohrs einen möglichst geringen Abstand aufweisen. Der Drehkörper 144 ist zumindest oberhalb des Förderelements 152 mit einem Hohlraum 172 versehen und weist in seiner ringförmigen Wand 145 wenigstens eine bevorzugt im wesentlichen radiale Ausnehmung oder Bohrung 174 auf. Das Förderrohr 136 weist im wesentlichen in der gleichen Radialebene wie die genannte Bohrung 174 wenigstens eine Öffnung 176 auf, deren Querschnittsfläche bevorzugt größer ist als die der Ausnehmung oder Bohrung 174 des Drehkörpers 144. Oberhalb der Öffnung ist aufgrund einer, insbesondere an der Innenwand des Förderrohres 136, vorgesehenen Ringschulter 177 nur noch eine erheblich reduzierte Spaltbreite vorhanden, welche als Dichtung nach oben wirkt. Schließlich ist am unteren Ende des Förderrohres 136 eine Leiteinrichtung 178 vorgesehen, um eine Rotationsströmung im Einlaufbereich des Förderrohres zu unterbinden und die Förderleistung zu erhöhen. Die Leiteinrichtung 178 kann als Ringkörper mit radialen Durchbrechungen, als Sieb oder wie hier dargestellt als sternförmig angeordnete Leitplatten ausgebildet sein.

Um mittels des ersten, äußeren Fördersystems Flüssigkeit zu fördern, dreht der Antriebsmotor 70 in einer ersten Drehrichtung, beispielsweise im Urzeigersinn. Hierbei wird mittels der Förderspirale 156 Flüssigkeit zum Anschlußstutzen 138 gefördert und wird über die daran angeschlossene Abflußleitung somit abgepumpt. Mittels der erfindungsgemäßen berührungslosen Dichtung 166 wird ein weiteres Hochsteigen der Flüssigkeit im Zwischenraum zwischen dem Drehkörper 144 und dem Förderrohr 136 unterbunden. Da die zweite Förderspirale 160 den gegenläufigen Drehsinn aufweist, wird von dieser keine Flüssigkeit nach oben gefördert. Wird hingegen durch Drehrichtungsumkehr des Antriebsmotors der Drehkörper 144 und somit das Förderelement 152 in der zweiten Drehrichtung, beispielsweise entgegen dem Uhrzeigersinn, gedreht, so fördert das zweite, innere Fördersystem Flüssigkeit nach oben, wobei mittels der Zwischenwand 164 ein Abreißen der Rotationsströmung erreicht wird und Flüssigkeit nach oben in den Hohlraum 172 und zur Ausnehmung 174 gelangt. Die Ausnehmung 174 wirkt als Düse, aus welcher die unter Druck stehende Flüssigkeit radial nach außen gepreßt und durch die Öffnung 176 bzw. Öffnungen 176 in die Reaktionskammer gesprüht wird. Hierbei erfolgt eine sehr effektive Durchmischung der in der Reaktionskammer vorhandenen Flüssigkeit. Besondere Rohrleitungen, Magnetventile oder dergleichen sind nicht notwendig, sondern es erfolgt lediglich durch Vorgabe der Drehrichtung die Einstellung auf die Betriebsart Durchmischen der Flüssigkeit bzw. Abpumpen der Flüssigkeit.

Fig. 13 zeigt eine Frontansicht der Neutralisationsanlage mit dem Laugentank 10, dem Säuretank 12 und der rechts daneben angeordneten Steuereinheit 20, von welcher oben das Bedienfeld, insbesondere mit der Anzeige 130 und dem Schalter 132 gut zu erkennen sind. Es sei festgehalten, daß bei dieser Ausführungsform keine Rückhaltekammer vorgesehen ist, so daß das zur Verfügung stehende Bauvolumen optimal genutzt wird. Unterhalb der Steuereinheit 20 sind zwei in die Reaktionskammer 2 einmündende Anschlußleitungen 180, 181 sowie ein Schauglas 182 vorgesehen. Mittels des Schauglases 182 kann von vorn sehr leicht der Füllstand der Flüssigkeit der Reaktionskammer 2 kontrolliert werden.

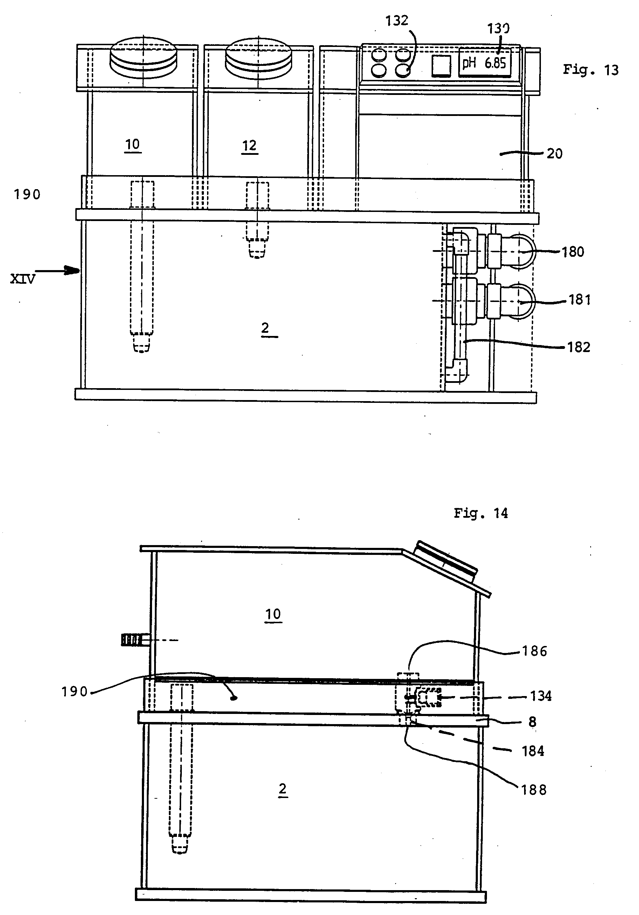

Fig. 14 zeigt eine Seitenansicht der Neutralisationsanlage mit dem über der Reaktionskammer 2 liegenden Laugentank 10. Im Bereich des Deckels 8, und zwar insbesondere auf dessen Oberseite, ist das Magnetventil 134 angeordnet. Das Magnetventil 134 enthält eine Verbindungsleitung 184 zwischen dem Laugentank 10 und der Reaktionskammer 2. Die Verbindungsleitung 184 besitzt einen Eingang 186, welcher in besonders zweckmäßiger Weise nahe am Boden des Laugentanks 10 liegt. Der Ausgang 188 der Verbindungsleitung 184 mündet unmittelbar von oben in die Reaktionskammer 2. Somit ist auf kürzestem Wege die Verbindung zwischen dem Laugentank 10 und der Reaktionskammer 2 herstellbar. Es bleiben praktisch keine Restmengen in der Verbindungsleitung 184, wodurch in besonders zweckmäßiger Weise eine sehr exakte Dosierung der Lauge ermöglicht wird. Entsprechendes gilt für das zweite Magnetventil zwischen dem Säuretank und der Reaktionskammer 2. Bei dieser Ausführungsform befindet sich das Magnetventil 134 in einem Zwischenraum 190 oberhalb des Deckels 8 und dem Boden des Tanks 10. Alternativ kann das Magnetventil auch unterhalb des Deckels 8, zweckmäßig gekapselt oder in einem kleinen Zwischenraum unterhalb des Deckels 8, angeordnet sein; bei einer derartige Ausgestaltung der Erfindung bildet der Deckel 8 unmittelbar den Boden des Laugentanks 10 sowie des Säuretanks. Die Verbindungsleitung 184 ist nur dann geöffnet, wenn das Magnetventil 134 von der Steuereinheit ein entsprechendes Steuersignal enthält. In diesem Fall kann allein durch die Schwerkraft die Lauge aus dem Laugentank 10 durch die kurze Verbindungsleitung 184 in die Reaktionskammer 2 laufen. Die Menge wird hierbei in einfacher Weise durch die Öffnungsdauer des Magnetventils 134 unter Berücksichtigung des Querschnitts der Verbindungsleitung 184 vorgegeben. In entsprechender Weise ist zwischen dem Säuretank und der Reaktionskammer das zweite Magnetventil angeordnet, um nach Bedarf auf kürzestem Wege Säure in die Reaktionskammer 2 einzuleiten.

### Bezugszeichen

- 2: Reaktionskammer
- 4: Boden
- 6: Seitenwand
- 8: Deckel
- 10: Laugentank
- 12: Säuretank
- 14: Installationsraum
- 16: Tauchpumpe
- 18: Verschlußdeckel
- 20: Steuereinheit
- 22: schwenkbare Klappe
- 24: Rückhaltekammer
- 26: Zulauf
- 28: Überlauf
- 30: Auslauf
- 32 - 34: Schauglas
- 36, 37: Einfüllstutzen
- 38: Deckel
- 40, 42: Leitung
- 44, 45: Pumpe
- 46, 47: Ventil
- 48, 49: Magnetventil
- 50: Rückwand
- 52: Zwischenwand
- 54: Einspritzleitung
- 56: Leitung
- 58: Magnetventil
- 62: Magnetventil
- 64: Leitung
- 66: freier Raum
- 70: Antriebsmotor von 16
- 72: Öffnung in 8
- 74: strichpunktierte Linie
- 75: Vertiefung
- 76: Auflageteil
- 78, 79: Bohrung
- 80, 81: äußerer Rand
- 82: Dichtelement
- 84: Nut in 76
- 86: Flansch
- 88: Wandteil
- 90: Boden von 24
- 92: Decke
- 94: Seitenwand
- 96: Einsatz
- 98: Flansch von 70
- 100: pH-Meßsonde
- 102: Leitung zum Auslauf
- 104: Hydraulikeinheit
- 106: Installationsplatte
- 108: Querbohrung
- 110: Gewinde
- 112: Öffnung
- 114, 116: Bohrung in 106
- 117: Schraube
- 118: Verschraubung
- 120: Höhe
- 122: vertikale Bohrung
- 124: Gewinde
- 130: Anzeige
- 132: Schalter
- 134, 135: Magnetventil
- 136: Förderrohr
- 138: Anschluß
- 140: Abflußleitung
- 142: Welle von 70
- 144: Drehkörper
- 146: Kupplung
- 148: Paßfeder
- 150: konische Ausnehmung in 144
- 152: Förderelement
- 154: Gewindeverbindung
- 156: äußere Förderspirale
- 158: Einsatzelement
- 160: zweite Förderspirale
- 162: Drehachse von 70
- 164: Zwischenwand
- 166: Dichtung
- 168: Zahnspitze
- 170: Innenfläche von 136
- 172: Hohlraum
- 174: Bohrung
- 176: Öffnung in 136
- 177: Ringschulter
- 178: Leiteinrichtung
- 180, 181: Anschlußleitung
- 182: Schauglas
- 184: Verbindungsleitung
- 186: Eingang von 184
- 188: Ausgang von 184
- 190: Zwischenraum

## Patentansprüche

1. Neutralisationsanlage mit mehreren zu einer Baueinheit verbundenen Kammern, von welchen eine als Reaktionskammer (2) für die zu neutralisierende Flüssigkeit, ferner eine als Laugentank (10) und eine andere als Säuretank (12) ausgebildet sind, und mit einem Installationsraum (14), in welchem ein Antriebsmotor (70) einer Pumpe (16) angeordnet ist, wobei ferner Leitungen und Ventile vorgesehen sind, dadurch gekennzeichnet, daß der Laugentank (10) und der Säuretank (12) auf einem die Reaktionskammer (2) oben abschließenden Deckel (8) angeordnet sind, daß auf dem Deckel (8) mit dem Laugentank (10) und dem Säuretank (12) in Verbindung stehende Strahlpumpen (44, 45) oder Magnetventile (134, 135) angeordnet sind, durch welche Lauge oder Säure in die darunter befindliche Reaktionskammer (2) einleitbar sind,
und daß die Pumpe (16), die bevorzugt eine Tauchpumpe ist, derart ausgebildet ist, daß sie in Abhängigkeit der Drehrichtung der Antriebswelle bzw. des Antriebsmotors einerseits zum Umwälzen der Flüssigkeit in der Reaktionskammer (2) andererseits zum Abpumpen der Flüssigkeit aus der Reaktionskammer (2) vorgesehen wird.

2. Neutralisationsanlage nach Anspruch 1, dadurch gekennzeichnet, daß auf dem Deckel (8) der Antriebsmotor (70) der Tauchpumpe (16) angeordnet ist, welche als von oben durch eine Öffnung (72) des Deckels (8) in die Reaktionskammer (2) hineinragende Tauchpumpe (16) ausgebildet ist.

3. Neutralisationsanlage nach Anspruch 1 oder 2, dadurch gekennzeichnet, daß eine vorgefertigte Hydraulikeinheit (104) mit einer Installationsplatte (106) vorgesehen ist, welche zumindest Teile der genannten Leitungen in Form von Bohrungen (108, 122) enthält, wobei die Installationsplatte (106) bevorzugt im Installationsraum (14) über der Reaktionskammer (2) angeordnet ist.

4. Neutralisationsanlage nach einem der Ansprüche 1 bis 3, dadurch gekennzeichnet, daß das eine Magnetventil (134) mit seinem Eingang (186) direkt mit dem Laugentank (10) und das andere Magnetventil (135) direkt mit dem Säuretank (12) in Verbindung stehen, wobei die Ausgänge (188) der genannten Magnetventile (134, 135) unmittelbar mit der Reaktionskammer (2) in Verbindung stehen.

5. Neutralisationsanlage nach einem der Ansprüche 1 bis 4, dadurch gekennzeichnet, daß neben dem Laugentank (10) oder dem Säuretank (12) eine Steuereinheit (22) angeordnet ist, welche bevorzugt im vorderen Bereich der Neutralisationsanlage vor dem Installationsraum (14) vorgesehen ist.

6. Neutralisationsanlage nach einem der Ansprüche 1 bis 5, dadurch gekennzeichnet, daß eine Rückhaltekammer (24), insbesondere oberhalb der Reaktionskammer (2) neben einem der genannten Tanks (10, 12), angeordnet ist und/oder daß die Zumischung von Lauge oder Säure mittels der Strahlpumpe (44) erfolgt, welche ebenso wie Leitungen (40, 42) sowie Magnetventile (48, 49) im Installationsraum (14) angeordnet ist.

7. Neutralisationsanlage nach einem der Ansprüche 1 bis 6, dadurch gekennzeichnet, daß an den oberen Enden der Seitenwände (6) der Reaktionskammer (2) Auflageteile (76) angeordnet sind, auf welchen der Deckel (8) aufliegt und/oder mittels welchen die Verbindung der Reaktionskammer (2) mit dem Deckel (8) oder dem Laugentank (10) und dem Säuretank (12) erfolgt.

8. Neutralisationsanlage nach einem der Ansprüche 2 bis 7, dadurch gekennzeichnet, daß die von oben in die Reaktionskammer (2) hineinragende Tauchpumpe (16) ein innerhalb eines Förderrohres (136) drehbares Förderelement (152) enthält, daß die Drehrichtung des Antriebsmotors (70) und des Förderelements (152) wahlweise vorgebbar ist, wobei in Abhängigkeit der vorgegebenen Drehrichtung die Flüssigkeit über einen Anschluß (138) aus der Reaktionskammer (2) abpumpbar oder innerhalb der Reaktionskammer (2) umwälzbar ist.

9. Neutralisationsanlage nach Anspruch 8, dadurch gekennzeichnet, daß oberhalb des Anschlusses (138) zwischen der Innenwand des Förderrohres (136) und dem Förderelement (152) eine Dichtung (166) vorgesehen ist, welche insbesondere als berührungsfreie Dichtung ausgebildet ist und/oder daß die Dichtung (166) als ein an der Außenfläche des Förderelements (152) angeordnetes Gewinde ausgebildet ist, dessen Zahnspitzen (148) einen vorgebbaren kleinen Abstand zur Innenfläche (170) des Förderrohres (136) aufweisen.

10. Neutralisationsanlage nach einem der Ansprüche 8 oder 9, dadurch gekennzeichnet, daß die Fördersysteme des Förderelements (152) im Bereich dessen Außenfläche eine erste Förderspirale (156) und im Inneren des Förderelements (152) eine zweite Förderspirale (160) enthalten, wobei diese beiden Förderspiralen (156, 160) zueinander entgegengerichteten Drehsinn aufweisen und/oder daß die innere, zweite Förderspirale (160) an der Außenfläche eines Einsatzelements (158) angeordnet ist, welches im Inneren des als hohler Ringkörper mit bevorzugt zylindrischer Innenfläche ausgebildeten Förderelements (152) angeordnet ist.

11. Neutralisationsanlage nach einem der Ansprüche 8 bis 10, dadurch gekennzeichnet, daß im Inneren des Förderelements (152) oberhalb der inneren, zweiten Förderspirale (160) und/oder des Einsatzelements (158) eine Zwischenswand (164) angeordnet ist, welche bevorzugt im wesentlichen in einer Axialebene angeordnet ist und/oder daß am unteren Ende des Förderrohres (136) eine Leiteinrichtung (178) angeordnet ist, welche zumindest zur Reduzierung einer Rotationsströmung vorgesehen ist.

12. Neutralisationsanlage nach einem der Ansprüche 8 bis 11, dadurch gekennzeichnet, daß oberhalb des Förderelements (152) und/oder oberhalb der Dichtung (166), bevorzugt im Drehkörper (144) ein Hohlraum (172) vorgesehen ist, welcher von einer ringförmigen Wand (145) umgeben ist, und daß die ringförmige Wand (145) wenigstens eine radial durchgehende Ausnehmung oder Bohrung (174) aufweist und daß das umgebende Förderrohr (136) wenigstens eine durchgehende Öffnung (176) aufweist, durch welche in den Hohlraum (172) geförderte und durch die Ausnehmung (174) nach außen gelangte Flüssigkeit in die umgebende Kammer (2) förderbar ist.

13. Neutralisationsanlage nach einem der Ansprüche 8 bis 12, dadurch gekennzeichnet, daß oberhalb der Öffnung (176) insbesondere die Innenfläche des Förderrohres (136) eine Ringschulter (177) derart aufweist, daß oberhalb derselben der Ringspalt zwischen der Außenfläche des Drehkörpers (144) und der Innenfläche des Förderrohres (136) verengt ist und/ oder daß das Förderrohr (136) und der Antriebsmotor (70) auf einem Flansch (98) befestigt sind, welche zur Befestigung auf einem über der Kammer (2) angeordneten Deckel (8) vorgesehen ist, wobei eine mit dem Anschluß (138) verbundene Abflußleitung (140) bevorzugt gleichfalls am Flansch (98) befestigt und insbesondere durch diesen nach oben hindurchgeführt ist.

## Claims

1. Neutralisation plant comprising a plurality of chambers connected together to form one unit, one of which is in the form of a reaction chamber (2) for the liquid to be neutralised, another one of which is in the form of a lye tank (10) and another one of which is in the form of an acid tank (12), and comprising an installation space (14) in which the drive motor (70) of a pump (16) is arranged, lines and valves furthermore being provided, characterised in that the lye tank (10) and the acid tank (12) are arranged on a cover (8) closing the reaction chamber (2) at the top, that jet pumps (44, 45) or solenoid valves (134, 135) connected to the lye tank (10) and the acid tank (12) are arranged on the cover (8), by means of which lye or acid can be introduced into the reaction chamber (2) situated therebelow, and that the pump (16), which is preferably a submerged pump, is designed in such a manner that it is provided, on the one hand, to circulate the liquid in the reaction chamber (2) and, on the other hand, to pump the liquid out of the reaction chamber (2) as a function of the direction of rotation of the drive shaft or the drive motor.

2. Neutralisation plant according to claim 1, characterised in that the drive motor (70) of the submerged pump (16) is arranged on the cover (8), said submerged pump (16) projecting into the reaction chamber (2) from above through an opening (72) in the cover (8).

3. Neutralisation plant according to claim 1 or claim 2, characterised in that a prefabricated hydraulic unit (104) is provided with an installation plate (106) containing at least parts of the aforesaid lines in the form of bores (108, 122), the installation plate (106) preferably being arranged in the installation space (14) above the reaction chamber (2).

4. Neutralisation plant according to one of claims 1 to 3, characterised in that one solenoid valve (134) is directly connected to the lye tank (10) via its inlet (186) and the other solenoid valve (135) is directly connected to the acid tank (12), the outlets (188) of the said solenoid valves (134, 135) being directly connected to the reaction chamber (2).

5. Neutralisation plant according to one of claims 1 to 4, characterised in that a control unit (22) is arranged alongside the lye tank (10) or the acid tank (12) and is preferably provided in the front region of the neutralisation plant upstream of the installation space (14).

6. Neutralisation plant according to one of claims 1 to 5, characterised in that a retention chamber (24) is arranged alongside one of the said tanks (10, 12), in particular above the reaction chamber (2), and/or that lye or acid is added by means of the jet pump (44), which, like the lines (40, 42) and the solenoid valves (48, 49), is arranged in the installation space (14).

7. Neutralisation plant according to one of claims 1 to 6, characterised in that bearing parts (76) on which the cover (8) rests and/or by means of which the reaction chamber (2) is connected to the cover (8) or to the lye tank (10) and the acid tank (12) are arranged at the upper ends of the side walls (6) of the reaction chamber (2).

8. Neutralisation plant according to one of claims 2 to 7, characterised in that the submerged pump (16) projecting into the reaction chamber (2) from above contains a conveying element (152) rotatable within a delivery pipe (136) and that the direction of rotation of the drive motor (70) and of the conveying element (152) can be selectively predetermined, wherein the liquid can be pumped out of the reaction chamber (2) via a port (138) or circulated within the reaction chamber (2) as a function of the predetermined direction of rotation.

9. Neutralisation plant according to claim 8, characterised in that a seal (166), in particular in the form of a contact-free seal, is provided above the port (138) between the inner wall of the delivery pipe (136) and the conveying element (152), and/or that the seal (166) is in the form of a thread arranged on the outer surface of the conveying element (152) and the tips (148) of which are at a predetermined short distance from the inner surface (170) of the delivery pipe (136).

10. Neutralisation plant according to one of claims 8 or 9, characterised in that the conveying systems of the conveying element (152) are provided in the region of the outer surface thereof with a first conveying screw (156) and in the interior of the conveying element (152) with a second conveying screw (160), these two conveying screws (156, 160) rotating in opposite directions to one another, and/or that the second inner conveying screw (160) is arranged on the outer surface of an insert element (158) which is arranged in the interior of the conveying element (152) in the form of a hollow annular body with a preferably cylindrical inner surface.

11. Neutralisation plant according to one of claims 8 to 10, characterised in that a partition wall (164), preferably arranged substantially in one axial plane, is arranged in the interior of the conveying element (152) above the second inner conveying screw (160) and/or the insert element (158), and/or that a guide means (178) provided at least to reduce a rotational flow is arranged at the lower end of the delivery pipe (136).

12. Neutralisation plant according to one of claims 8 to 11, characterised in that a cavity (172) surrounded by an annular wail (145) is provided above the conveying element (152) and/or above the seal (166), preferably in the rotor (144), and that the annular wall (145) has at least one radial through recess or bore (174) and that the surrounding delivery pipe (136) has at least one through opening (176) through which liquid delivered into the cavity (172) and discharged towards the outside via the recess (174) can be delivered to the surrounding chamber (2).

13. Neutralisation plant according to one of claims 8 to 12, characterised in that the inner surface of the delivery pipe (136), in particular, is provided above the opening (176) with an annular shoulder (177) in such a manner that the annular gap between the outer surface of the rotor (144) and the inner surface of the delivery pipe (136) is narrowed above it and/or that the delivery pipe (136) and the drive motor (70) are secured to a flange (98) provided for securing to a cover (8) arranged above the chamber (2), a discharge line (140) connected to the port (138) preferably also being secured to the flange (98) and, in particular, being guided upwards through the latter.

## Revendications

1. Installation de neutralisation comportant plusieurs chambres, qui sont reliées pour former une unité de construction et parmi lesquelles une chambre est agencée sous la forme d'une chambre de réaction (2) pour le liquide à neutraliser, et en outre une chambre est agencée sous la forme d'un réservoir à lessive (10) et une autre chambre est agencée sous la forme d'un réservoir d'acide (12), et comportant une enceinte (14), dans laquelle est disposé un moteur d'entraînement (70) d'une pompe (16), et dans laquelle en outre sont prévues des canalisations et des vannes, caractérisée en ce que le réservoir à lessive (10) et le réservoir d'acide (12) sont disposés sur un couvercle (8), qui ferme la chambre de réaction (2) à sa partie supérieure, que sur le couvercle (8) sont disposées des pompes à jet (44,45) ou des électrovannes (134,135) qui sont reliées au réservoir à lessive (10) et au réservoir à acide (12) et au moyen desquelles une lessive ou un acide peut être introduit dans la chambre de réaction sous-jacente (2), et
que la pompe (16), qui est de préférence une pompe immergée, est agencée de telle sorte qu'en fonction du sens de rotation de l'arbre d'entraînement ou du moteur d'entraînement, elle est prévue d'une part pour entraîner en circulation le liquide dans la chambre de réaction (2) et d'autre part pour prélever par pompage du liquide à partir de la chambre de réaction (2).

2. Installation de neutralisation selon la revendication 1, caractérisée en ce que sur le couvercle (8) est disposé le moteur d'entraînement (70) de la pompe immergée (16), qui est agencée sous la forme d'une pompe immergée (16) qui pénètre à partir du haut dans la chambre de réaction (2) par une ouverture (72) du couvercle (8).

3. Installation de neutralisation selon la revendication 1 ou 2, caractérisée en ce qu'une unité hydraulique préfabriquée (104) est équipée d'une plaque (106) de l'installation, qui contient au moins des parties des canalisations indiquées sous la forme de perçages (108, 122), la plaque (106) de l'installation étant disposée de préférence dans l'enceinte (14) de l'installation au-dessous de la chambre de réaction (2).

4. Installation de neutralisation selon l'une des revendications 1 à 3, caractérisée en ce qu'une électrovanne (134) est raccordée par son entrée (186) directement au réservoir à lessive (10) et que l'autre électrovanne (135) est raccordée directement au réservoir à acide (12), les sorties (168) desdites électrovannes (134,135) étant raccordées directement à la chambre de réaction (2).

5. Installation de neutralisation selon l'une des revendications 1 à 4, caractérisée en ce qu'en dehors du réservoir à lessive (10) ou du réservoir à acide (12) est disposée une unité de commande (22), qui est prévue de préférence dans la partie avant de l'installation de neutralisation, en amont de l'enceinte (14) de l'installation.

6. Installation de neutralisation selon l'une des revendications 1 à 5, caractérisée en ce qu'une chambre de retenue (24) est disposée notamment au-dessus de la chambre de réaction (2), à côté de l'un desdits réservoirs (10,12) et/ou que l'introduction de lessive ou d'acide en mélange s'effectue au moyen de la pompe à jet (44), qui est disposée de même que des canalisations (40,42) et des électrovannes (48,49), dans l'enceinte (14) de l'installation.

7. Installation de neutralisation selon l'une des revendications 1 à 6, caractérisée en ce que sur les extrémités supérieures des parois latérales (6) de la chambre de réaction (2) sont disposés des éléments d'appui (76), sur lesquels le couvercle (8) est en appui et/ou au moyen desquels est établie la liaison de la chambre de réaction (2) avec le couvercle (8) ou avec le réservoir à lessive (10) et le réservoir à acide (12).

8. Installation de neutralisation selon l'une des revendications 2 à 7, caractérisée en ce que la pompe immergée (16), qui pénètre à partir du haut dans la chambre de réaction (2), contient un élément de convoyage (152), qui peut tourner à l'intérieur d'un tube d'entraînement (70), que le sens de rotation du moteur d'entraînement (136) et de l'élément de convoyage (152) peut être prédéterminé à volonté, auquel cas, en fonction du sens de rotation prédéterminé, le liquide peut être pompé par l'intermédiaire d'un raccord (138) à partir de la chambre de réaction (2) ou peut être entraîné en circulation à l'intérieur de la chambre de réaction (2).

9. Installation de neutralisation selon la revendication 8, caractérisée en ce qu'au-dessus du raccord (138) entre la paroi intérieure du tube de convoyage (136) et l'élément de convoyage (152) est prévue une garniture d'étanchéité (166), qui est agencée sous la forme d'une garniture d'étanchéité sans contact et/ou que la garniture d'étanchéité (166) est agencée sous la forme d'un filetage disposé sur la surface extérieure de l'élément de convoyage (152) et dont les pointes (148) des dents sont séparées par une faible distance pouvant être prédéterminée, de la surface intérieure (170) du tube de convoyage (136).

10. Installation de neutralisation selon l'une des revendications 8 ou 9, caractérisée en ce que les systèmes de convoyage de l'élément de convoyage (152) contiennent, dans la zone de leur surface extérieure, une première spirale de convoyage (156) et à l'intérieur de l'élément de convoyage (152) une seconde spirale de convoyage (160), ces deux spirales de convoyage (156,160) possédant des sens de rotation réciproquement opposés, et/ou que la seconde spirale intérieure de convoyage (150) est disposée sur la surface extérieure d'un élément formant insert (158), qui est disposé à l'intérieur de l'élément de convoyage (152) agencé sous la forme d'un corps annulaire creux comportant une surface intérieure de préférence cylindrique.

11. Installation de neutralisation selon l'une des revendications 8 à 10, caractérisée en ce qu'à l'intérieur de l'élément de convoyage (152) est disposée, au-dessus de la seconde spirale intérieure de convoyage (160) et/ou de l'élément formant insert (158), une paroi intercalaire (164) qui est disposée de préférence dans un plan axial et/ou que sur l'extrémité inférieure du tube de convoyage (166) est disposé un dispositif de guidage (178), qui est prévu au moins pour réduire un écoulement en rotation.

12. Installation de neutralisation selon l'une des revendications 8 à 11, caractérisée en ce qu'au-dessus de l'élément de convoyage (152) et/ou au-dessus de la garniture d'étanchéité (166) est prévue, de préférence dans le corps rotatif (144), une cavité (172), qui est entourée par une paroi annulaire (145), et que la paroi annulaire (145) possède au moins un évidement ou un perçage radial continu (174) et que le tube de convoyage enveloppant (136) comporte au moins une ouverture continue (176), par laquelle un liquide, convoyé dans la cavité (172) et parvenant à l'extérieur en franchissant l'ouverture (174), peut être introduit dans la chambre environnante (2).

13. Installation de neutralisation selon l'une des revendications 8 à 12, caractérisée en ce qu'au-dessus de l'ouverture (176), notamment la surface intérieure du tube de convoyage (136) possède un épaulement annulaire (177) de telle sorte qu'au-dessus de ce dernier la fente annulaire présente entre la surface extérieure du corps rotatif (144) et la surface intérieure du tube de convoyage (136) est rétrécie et/ou que le tube de convoyage (136) et le moteur d'entraînement (70) sont fixés à une bride (98), qui est prévue pour la fixation sur un couvercle (8) disposé au-dessus de la chambre (2), tandis qu'une canalisation d'évacuation (140) reliée au raccord (138) est fixée de préférence également à la bride (98) et notamment ressort vers le haut à travers cette bride.
